# EUROPEAN PATENT APPLICATION

(11) **EP 3 633 983 A1**
(43) Date of publication of application: **08.04.2020**
(21) Application number: 18806404.2
(22) Date of filing: 07.05.2018
(51) Int. Cl.: H04N 7/15

(54) **CONFERENCE CONTROL METHOD AND SYSTEM, ICMS, AND CONFERENCE SERVICE SYSTEM**

(30) Priority: 23.05.2017 CN 201710370206
(71) Applicant: ZTE Corporation, Shenzhen, Guangdong 518057 (CN)
(72) Inventor: TAN, Jiayu, Shenzhen, Guangdong 518057 (CN)
(74) Representative: Petraz, Gilberto Luigi
(86) International application number: PCT/CN2018/085822
(87) International publication number: WO 2018/214721

(57) **Abstract**

Disclosed are a conference control method, a conference control system, an ICMS, and a conference service system. The method includes: receiving, by the ICMS, a conference calling request input by a user, the conference calling request carrying a list of terminals to attend the conference therein; learning, by the ICMS, each of conference service systems corresponding to a respective one of terminal identifiers carried in the conference calling request by querying a local address book; sending, by the ICMS, a conference notification message to each of the conference service systems learned; and holding, by the conference service systems, a conference according to the conference notification message after the conference notification message sent by the ICMS is received.

## Description

### Field of the Invention

The present disclosure relates to the field of audio and video communication, and in particular, to a conference control method, a conference control system, an ICMS and a conference service system.

### Background of the Invention

At present, with the rapid development of information, audio and video communication has been applied on a large scale in flood prevention, fire prevention, agriculture, marine fisheries, government conferences, corporate communication, and personal communication. When an audio and video communication system is used in an institution with a clear administrative level, such as a government agency or a bank, a multi-level networking of province, city and county is mostly used. That is, a multipoint control unit MCU is placed in each province, city and county, and there are several terminals in each province, city and county. Respective MCUs are managed by a conference service management system. MCUs of the province, city and county are connected by cascading, so that terminals of the province, city and county constitute a large conference. At present, with respect to such a networking mode, there is an urgent need to solve two problems. A first problem is that a manner of holding a conference is relatively complicated; and a second problem is that conference control is very complex for a MCU service system. The above two problems, i.e., the problem of complication for holing the conference and the problem of conference management, increase difficulty of conference control and reduces efficiency of the conference control.

### Summary of the Invention

The following is a summary of the subject matter described in detail herein. The summary is not for limiting the protection scope of the claims.

With respect to the problem of relatively low efficiency of conference control caused by the complication for conference setting and the difficulty of conference control, a conference control method, a conference control system, an ICMS, and a conference service system are provided in the present disclosure.

The present disclosure provides a conference control method, including:
receiving, by an integrated conference management system ICMS, a conference calling request input by a user, the conference calling request carrying a list of terminals to attend the conference therein;
learning, by the ICMS, each of conference service systems corresponding to a respective one of terminal identifiers carried in the conference calling request by querying a local address book;
sending, by the ICMS, a conference notification message to each of the conference service systems learned;
holding, by the conference service systems, a conference according to the conference notification message after the conference notification message sent by the ICMS is received.

In an exemplary embodiment, the conference control method further includes:
sending, by the ICMS, an address book querying request message to each of the conference service systems respectively;
sending, by each of the conference service systems, a first address book corresponding to the present conference service system to the ICMS after the address book querying request message sent by the ICMS is received;
comparing, by the ICMS, the first address book with a second address book corresponding to the conference service system locally stored in the ICMS after the first address book sent by each of the conference service systems is received, and updating the second address book and/or notifying the conference service system to update the corresponding first address book according to a comparison result.

In an exemplary embodiment, if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

In an exemplary embodiment, the conference control method further includes holding the conference by the conference service systems according to one of the following manners:
in a first manner, when a first conference service system corresponding to a broadcaster terminal establishes the conference, a terminal for receiving a dual-path calling in a second conference service system is added to the conference of the first conference service system; after receiving a broadcast code stream sent by the first conference service system, the terminal uploads the broadcast code stream to the second conference service system; and the second conference service system sends the broadcast code stream to multiple terminals corresponding to the second conference service system; and
in a second manner, when the second conference service system other than the first conference service system corresponding to the broadcaster terminal establishes the conference, a terminal for receiving the dual-path calling in the first conference service system is added to the conference of the second conference service system; after receiving the broadcast code stream sent by the first conference service system, the terminal uploads the broadcast code stream to the second conference service system; and the second conference service system sends the broadcast code stream to multiple terminals corresponding to the second conference service system.

In an exemplary embodiment, when the conference is held according to the first manner, the method further includes that:
when a third conference system other than the first conference service system corresponding to the broadcaster terminal establishes the conference, if the third conference system is not provided therein with a terminal for receiving the dual-path calling, the third conference system adds a terminal for receiving the dual-path calling in other conference systems to the conference of the third conference system, and the terminal uploads the broadcast code stream to the third conference system after receiving the broadcast code stream sent by the first conference service system.

The present disclosure further provides a conference control method, including:
receiving, by an ICMS, a conference calling request input by a user, the conference calling request carrying a list of terminals to attend the conference therein;
learning, by the ICMS, each of conference service systems corresponding to a respective one of terminal identifiers carried in the conference calling request by querying a local address book; and
sending, by the ICMS, a conference notification message to each of the conference service systems learned, so that the conference service systems hold a conference according to the conference notification message received.

In an exemplary embodiment, the conference control method further includes:
sending, by the ICMS, an address book querying request message to each of the conference service systems respectively;
receiving, by the ICMS, a first address book corresponding to the conference service system sent by each of the conference service systems;
comparing, by the ICMS, the first address book with a second address book corresponding to the conference service system locally stored in the ICMS, and updating the second address book and/or notifying the conference service system to update the corresponding first address book according to a comparison result.

In an exemplary embodiment, if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

In an exemplary embodiment, after the ICMS learns each of the conference service systems corresponding to the respective one of terminal identifiers carried in the conference calling request by querying the local address book, the ICMS further determines a terminal to be supplemented to each of the conference service systems;
wherein the conference notification message sent by the ICMS to each of the conference service systems carries the terminal to be supplemented therein; and
the ICMS determines the terminal to be supplemented to each of the conference service systems according to one of the following manners:
in a first manner, when a first conference service system corresponding to a broadcaster terminal establishes the conference, a terminal for receiving a dual-path calling in a second conference service system is added to the conference of the first conference service system, and
the terminal for receiving the dual-path calling in the second conference service system is arranged to be a forwarder terminal in the conference of the second conference service system; and
in a second manner, when the second conference service system other than the first conference service system corresponding to the broadcaster terminal establishes the conference, a terminal for receiving the dual-path calling in the first conference service system is added to the conference of the second conference service system, and the terminal is arranged to be the forwarder terminal in the conference of the second conference service system.

In an exemplary embodiment, when the terminal to be supplemented to each of the conference service systems is determined according to the first manner, the method further includes that:
when a third conference system other than the first conference service system corresponding to the broadcaster terminal establishes the conference, if the third conference system is not provided therein with a terminal for receiving the dual-path calling, the third conference system adds a terminal for receiving the dual-path calling in other conference systems to the conference of the third conference system, and the terminal is arranged to be the forwarder terminal in the conference of the second conference service system.

The present disclosure further provides a conference control method, including:
holding, by conference service systems after a conference notification message sent by an ICMS is received, a conference according to the conference notification message.

In an exemplary embodiment, the conference control method further includes:
sending, by each of the conference service systems after an address book querying request message sent by the ICMS is received, a first address book corresponding to the present conference service system to the ICMS; and
adding, by each of the conference service systems after a message for notifying the conference service system to update the first address book corresponding to the conference service system sent by the ICMS, a terminal identifier carried in the message to the first address book.

In an exemplary embodiment, terminal identifiers carried in the conference notification message include at least one of a conference terminal identifier, a broadcaster terminal identifier and a forwarder terminal identifier;
the conference service system adds terminals corresponding to the terminal identifiers carried in the conference notification message to the conference;
wherein when the broadcaster terminal identifier is included in the conference notification message, the conference service system receives a broadcast code stream sent by a broadcast terminal and sends the broadcast code stream to other respective terminals corresponding to the conference service system; and
when the forwarder terminal identifier is included in the conference notification message, the conference service system receives a broadcast code stream sent by a forwarder terminal and sends the broadcast code stream to other respective terminals corresponding to the conference service system.

The present disclosure further provides a conference control system. The conference control system includes an ICMS and conference service systems, wherein each of the conference service systems is arranged on a respective one of MCUs, and the ICMS is connected to each of the conference service systems,
wherein the ICMS includes:
a request input unit, which is configured to receive a conference calling request input by a user, the conference calling request carrying a list of terminals to attend the conference therein;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message, and
wherein the conference service system includes:
   a receiving unit, which is configured to receive the conference notification message sent by the ICMS; and
   a conference unit, which is configured to hold a conference according to the conference notification message after receiving the conference notification message sent by the ICMS.

In an exemplary embodiment, the ICMS further includes a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book and/or notify the conference service system to update the corresponding first address book according to a comparison result; and
the conference service system further includes a second address book management unit, which is configured to: receive the address book querying request message sent by the ICMS; send the first address book corresponding to the present conference service system to the ICMS after receiving the address book querying request message sent by the ICMS; receive a message for notifying the conference service system to update the corresponding first address book sent by the ICMS; and add a terminal identifier carried in the message to the first address book after receiving the message for notifying the conference service system to update the corresponding first address book sent by the ICMS.

In an exemplary embodiment, if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

In an exemplary embodiment, the determination unit is further configured to determine a terminal to be supplemented to each of the conference service systems, and make the terminal to be supplemented carried in the conference notification message,
wherein the determination unit determines the terminal to be supplemented to each of the conference service systems according one of the following manners:
in a first manner, when a first conference service system corresponding to the broadcaster terminal establishes a conference, a terminal for receiving the dual-path calling in a second conference service system is added to the conference of the first conference service system; and
in a second manner, when the second conference service system other than the first conference service system corresponding to the broadcaster terminal establishes the conference, a terminal for receiving the dual-path calling in the first conference service system is added to the conference of the second conference service system;
terminal identifiers carried in the conference notification message include at least one of a conference terminal identifier, a broadcaster terminal identifier and a forwarder terminal identifier; and
the conference unit is further arranged to add terminals corresponding to the terminal identifiers carried in the conference notification message to the conference, wherein when the broadcaster terminal identifier is included in the conference notification message, the conference service system receives a broadcast code stream sent by the broadcaster terminal, and sends the broadcast code stream to other respective terminals corresponding to the conference service system, and wherein when the forwarder terminal identifier is included in the conference notification message, the conference service system receives a broadcast code stream sent by a forwarder terminal, and sends the broadcast code stream to other respective terminals corresponding to the conference service system.

In an exemplary embodiment, when the terminal to be supplemented to each of the conference service systems is determined according to the first manner, a determination process further includes that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system.

The present disclosure further provides an ICMS. The ICMS is connected to each of conference service systems, and each of the conference service systems is arranged on a respective one of MCUs; and
the ICMS includes:
a request input unit, which is configured to receive a conference calling request input by a user, the conference calling request carrying a list of terminals to attend the conference therein;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message

In an exemplary embodiment, the ICMS further includes:
a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book and/or notify the conference service system to update the corresponding first address book according to a comparison result.

In an exemplary embodiment, if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

In an exemplary embodiment, the determination unit is further configured to determine a terminal to be supplemented to each of the conference service systems, and make the terminal to be supplemented carried in the conference notification message; and
wherein the determination unit determines the terminal to be supplemented to each of the conference service systems according one of the following manners:
in a first manner, when a first conference service system corresponding to the broadcaster terminal establishes a conference, a terminal for receiving the dual-path calling in a second conference service system is added to the conference of the first conference service system,
and the terminal for receiving the dual-path calling in the second conference service system is arranged to be a forwarder terminal in the conference of the second conference service system; and
in a second manner, when the second conference service system other than the first conference service system corresponding to the broadcaster terminal establishes the conference, a terminal for receiving the dual-path calling in the first conference service system is added to the conference of the second conference service system, and the terminal is arranged to be a forwarder terminal forwarder terminal in the conference of the second conference service system.

In an exemplary embodiment, when the terminal to be supplemented to each of the conference service systems is determined according to the first manner, a determination process further includes that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system, and the terminal is arranged to be the forwarder terminal forwarder terminal in the conference of the second conference service system.

The present disclosure further provides a conference service system, including:
a receiving unit, which is configured to receive a conference notification message sent by an ICMS; and
a conference unit, which is configured to hold a conference according to the conference notification message after receiving the conference notification message sent by the ICMS.

In an exemplary embodiment, the conference service system further includes a second address book management unit, which is configured to:
receive an address book querying request message sent by the ICMS;
send a first address book corresponding to the present conference service system to the ICMS after receiving the address book querying request message sent by the ICMS;
receive a message for notifying the conference service system to update the corresponding first address book sent by the ICMS; and
add a terminal identifier carried in the message to the first address book after receiving the message for notifying the conference service system to update the corresponding first address book sent by the ICMS.

In an exemplary embodiment, terminal identifiers carried in the conference notification message include at least one of a conference terminal identifier, a broadcaster terminal identifier and a forwarder terminal identifier; and
the conference unit is further arranged to:
add terminals corresponding to the terminal identifiers carried in the conference notification message to the conference,
wherein when the broadcaster terminal identifier is included in the conference notification message, the conference service system receives a broadcast code stream sent by the broadcaster terminal, and sends the broadcast code stream to other respective terminals corresponding to the conference service system, and
wherein when the forwarder terminal identifier is included in the conference notification message, the conference service system receives a broadcast code stream sent by a forwarder terminal, and sends the broadcast code stream to other respective terminals corresponding to the conference service system.

The present disclosure further discloses a computer readable storage medium with a computer executable instruction stored therein, and the computer executable instruction implements any method described above when executed by a processor.

The solution provided by the present disclosure includes: receiving, by an ICMS, a conference calling request input by a user, the conference calling request carrying a list of terminals to attend the conference therein; learning, by the ICMS, each of conference service systems corresponding to a respective one of terminal identifiers carried in the conference calling request by querying a local address book; sending, by the ICMS, a conference notification message to the each of conference service systems learned; holding, by the conference service systems, a conference according to the conference notification message after the conference notification message sent by the ICMS is received. By means of the solution of the present disclosure, when a conference is to be held, it is only needed to operate on an ICMS system, i.e., selecting terminals to attend the conference and clicking to hold a conference, which is easy to use and does not require that a user set a complicated cascade relationship each time when a conference is to be held; there is no longer a cascade port, and cascading is realized by way of terminals; and conference control response is quick, and for the case, that one conference management system manages multiple MCUs, an original performance bottleneck problem and a problem of frequently switching among conferences by controls terminals are solved.

### Brief Description of the Drawings

Fig. 1 is a schematic diagram of a multi-level networking mode of province, city and county;
Fig. 2 is a schematic diagram of service system management;
Fig. 3 is a schematic diagram of a structure of a cascade conference control system provided in an embodiment of the present disclosure;
Fig. 4 is schematic diagram of a process of maintaining an address book by an ICMS and a conference service system provided in an embodiment of the present disclosure;
Fig. 5A and Fig. 5B are schematic diagrams of a process of a conference control method provided in an embodiment of the present disclosure; and
Fig. 6 is a schematic diagram of a control process of a successfully held conference provided in an embodiment of the present disclosure.

### Detailed Description of the Embodiments

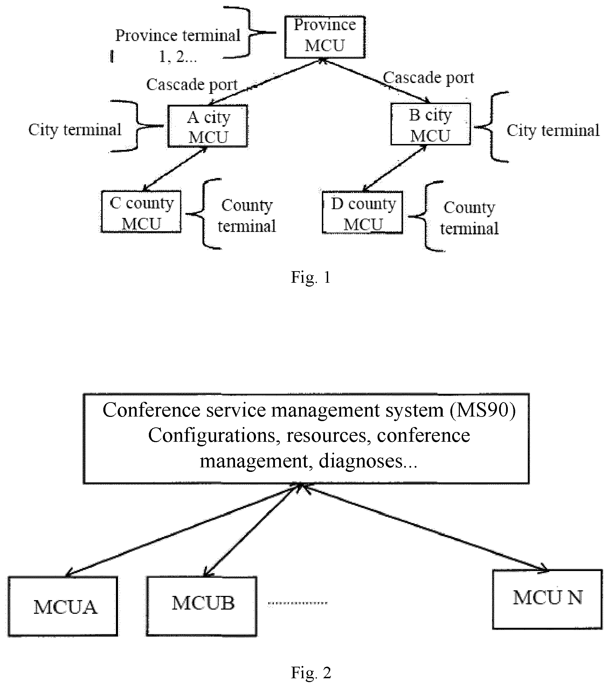

When an audio and video communication system is used in an institution with a clear administrative level, such as a government agency or a bank, as shown in Fig. 1, a multi-level networking of province, city and county is mostly used. That is, a multipoint control unit MCU is placed in each province, city and county, and there are several terminals in each province, city and county. Respective MCUs are managed by a conference service management system, for example, service management system MS90. When a conference is held, a province terminal is directly connected to a province MCU, and a city terminal and a county terminal are respectively connected to a city MCU and a county MCU. Then MCUs of province, city and county are connected by cascading, so that terminals of the province, city and county constitute a large conference.

At present, with respect to such a networking mode, there is an urgent need to solve two problems.

A first problem is that a manner of holding the conference is relatively complicated. A two-level conference is taken as an example. For example, a province terminal and a city terminal are included. When a cascade conference is hold, a user manually sets two conferences, i.e., a province conference and a city conference, and adds a cascade port in each conference so that the province conference and the city conference can communicate with each other. In an extreme circumstance, for example a circumstance that a conference of the whole province includes 100 MCUs, establishing a cascade relationship for these 100 MCUs involves a great deal of work and is very complicated and error-prone.

A second problem is that conference control is very complex for a MCU service system. 100 MCUs are taken as an example. As shown in Fig. 2, a current conference control manner is that one service system manages all MCUs of the province, city and county. Various configurations, resource management, service diagnoses, service operations are all processed in one conference service management system. In such a case that one service system manages as many as one hundred of MCUs, a performance problem may occur, which leads to circumstances such as slow operation, slow response, or even timeout failure. Besides, terminals are managed in respective conferences respectively, and a unified management to the terminals cannot be performed.

The above two problems, i.e., the problem of complication for holing the conference and the problem of conference control, increase difficulty of conference control and reduces efficiency of the conference control.

In order to facilitate understanding by those skilled in the art, the present disclosure is further described with reference to the accompanying drawings.

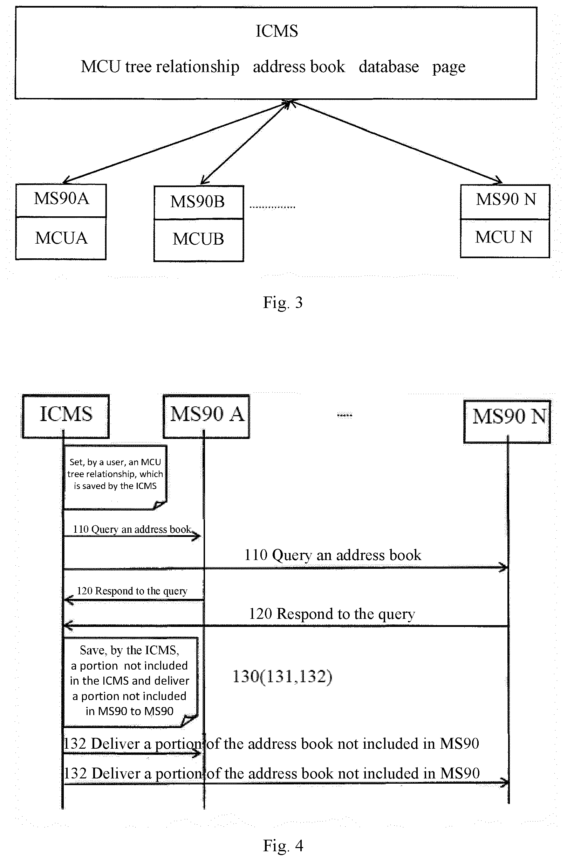

Referring to Fig. 3, a cascade conference control system is provided in the present disclosure.

The cascade conference control system includes: an integrated conference management system ICMS10, a MCU 20 and a terminal 30 (not shown in Fig. 3). Each MCU is provided with a corresponding conference service system MS90. The conference service system MS90 may independently perform operations such as resource management, conference diagnoses and so on.

A process of maintaining a local address book by the ICMS and the MCU will be described below. The conference service system corresponding to the MCU maintains the local address book. The local address book includes terminal identifiers of all terminals managed by the MCU. An ICMS local address book includes all MCUs and a list of terminal identifiers corresponding to the MCUs.

As shown in Fig. 4, in an embodiment of the present disclosure, the process of maintaining address books by the ICMS and conference service systems includes the following steps.

At step 110, the ICMS sends an address book querying request message to each of the conference service systems.

Before the step 110, the process further includes: receiving, by the ICMS, a tree relationship of the MCUs set by the user and saving the tree relationship of the MCUs. The tree relationship is set by the user according to specific administrative subordination relations. For example, MCUA represents a province; MCUB, MCUC and MCUD respectively represent a city; and other MCUs represent a county.

At step 120, after receiving the address book querying request message sent by the ICMS, each of the conference service systems sends a first address book corresponding to the present conference service system to the ICMS.

The first address book corresponding to the present conference service system can be carried in a querying response and sent to the ICMS.

At step 130, after receiving the first address book sent by each of the conference service systems, the ICMS compares the first address book with a second address book corresponding to the conference service system locally stored in the ICMS, and updates the second address book and/or notify the conference service system to update the corresponding first address book according to a comparison result.

The step of updating the second address book and/or notifying the conference service system to update the corresponding first address book according to the comparison result includes the following steps.

At step 131, if the first address book has a terminal identifier that is not included in the second address book, the terminal identifier is added to the second address book.

At step 132, if the second address book has a terminal identifier that is not included in the first address book, the terminal identifier is sent to the conference service system, so as to notify the conference service system to add the terminal identifier to the corresponding first address book.

A specific example will be illustrated below.

For example, an address book of a conference service system A corresponding to the MCUA stored in the ICMS includes terminals 1, 2, 3, 4. After the ICMS sends an address book querying request message to the MCUA, an address book sent by the conference service system A corresponding to the MCUA includes terminals 2, 3, 4, 5. The ICMS compares the address book existing therein with the address book sent by the conference service system A. Then, the ICMS saves the terminal 5 in the local address book, and meanwhile sends the terminal 1 to the corresponding conference service system A, so as to notify the conference service system A to add the terminal A to the local address book of the MCUA . The specific process is shown in Fig. 4.

A conference control method provided by the present embodiment will be illustrated below.

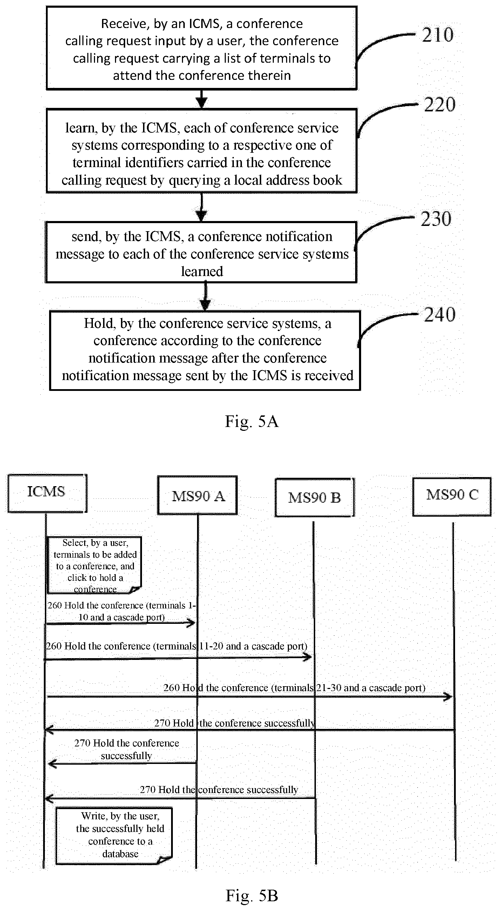

As shown in Fig. 5A and Fig. 5B, the conference control method provided by the present disclosure includes the following steps.

At step 210, the ICMS receives a conference calling request input by a user, and the conference calling request carries a list of terminals to attend the conference therein.

At step 220, the ICMS learns each of conference service systems corresponding to a respective one of terminal identifiers carried in the conference calling request by querying a local address book.

At step 230, the ICMS sends a conference notification message to each of the conference service systems learned.

The conference notification message carries identifiers of terminals to attend the conference.

For example, a MCU of the conference service system A is provided with terminals 1-10. If the conference notification message sent to the conference service system A carries identifiers of terminals 1-5 therein, it is indicated that terminals 1-5 are to attend the conference; and if the conference notification message sent to the conference service system A carries identifiers of terminals 6-10 therein, it is indicated that terminals 6-10 are to attend the conference.

At step 240, the conference service systems hold a conference according to the conference notification message after the conference notification message sent by the ICMS is received.

Corresponding terminals are notified that a conference is to be held according to the identifiers of terminals carried in the conference notification message. That is, each of the conference service systems adds terminals requested by the user to the conference.

In an example, step 250 is further included after step 240. At step 250, after successfully holding the conference, each of the conference service systems sends a conference success response message to the ICMS; and the conference success response message carries conference information therein.

In another example, the following steps are further included after step 240.

At step 260, after receiving conference querying information input by the user, the ICMS learns the conference service systems corresponding to the conference, and sends the conference querying information to each of the conference service systems.

At step 270, each of the conference service systems sends conference information to the ICMS.

At step 280, the ICMS generates a conference operation list according to the conference information sent by respective conference service systems, and the operation list shows all MCUs involved in the conference and corresponding terminals thereof.

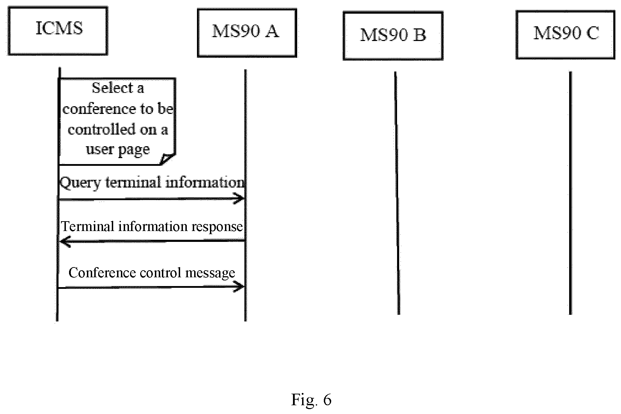

Fig. 6 is a schematic diagram of a control process of a successfully held conference. For the successfully held conference, information has been stored in an ICMS database.

The user opens an ICMS conference management page.

On the page, all conferences being held are shown in a tree diagram according to a cascade relationship of the conferences. To control a certain conference, the user directly clicks the conference, and the ICMS may instantly query a corresponding conference service system for terminal information and show the terminal information on the page. Then, the user may perform operations to the specific terminal, and the ICMS may directly send a corresponding operation signaling to the corresponding conference service system.

The process involving multiple conference service systems is basically similar to the above process, and will not be described in detail.

In the present embodiment, there is at least one terminal capable of receiving a dual-path calling among terminals corresponding to each of the conference service systems.

In the present embodiment, at least one terminal for receiving the dual-path calling is included among terminals of the system. If the conference requested by the user does not include any terminal for receiving the dual-path calling, the service conference system further adds any terminal for receiving the dual-path calling to the conference in addition to terminals requested by the user when establishing the conference, and at the same time a camera, a mic and video output of the terminal for receiving the dual-path calling may be turned off.

In the present embodiment, the conference service systems hold the conference according to one of the following manners.

In a first manner, when a first conference service system corresponding to a broadcaster terminal establishes a conference, a terminal for receiving the dual-path calling in a second conference service system is added to the conference of the first conference service system; after receiving a broadcast code stream sent by the first conference service system, the terminal uploads the broadcast code stream to the second conference service system; and the second conference service system sends the broadcast code stream to respective terminals corresponding to the second conference service system.

When a third conference system other than the first conference service system corresponding to the broadcaster terminal establishes the conference, if the third conference system is not provided therein with a terminal for receiving the dual-path calling, the third conference system adds a terminal for receiving the dual-path calling in other conference systems to the conference of the third conference system. After receiving the broadcast code stream sent by the first conference service system, the terminal uploads the broadcast code stream to the third conference service system.

In another example of the present embodiment, a second manner is provided.

In the second manner, when the second conference service system other than the first conference service system corresponding to the broadcaster terminal establishes the conference, a terminal for receiving the dual-path calling in the first conference service system is added to the conference of the second conference service system; after receiving the broadcast code stream sent by the first conference service system, the terminal uploads the broadcast code stream to the second conference service system; and the second conference service system sends the broadcast code stream to respective terminals corresponding to the second conference service system.

The conference control method provided in the present embodiment will be illustrated in a specific example.

Contents of the local address book of the ICMS are as follows:
terminal information of a conference service system A is 1-10;
terminal information of a conference service system B is 11-20; and
terminal information of a conference service system C is 21-30.

In this example, the terminal 5 is a broadcaster terminal, and the terminal 1, the terminal 11 and the terminal 21 are capable of receiving the dual-path calling. The ICMS receives a request that a conference involving the terminals 1-30 is to be held.

At step 310, the ICMS receives a conference calling request input by the user, and the conference calling request carries a list of terminals to attend the conference therein, the list of terminals including the terminals 1-30.

At step 320, the ICMS learns, by querying the local address book, that conference service systems corresponding to respective terminal identifiers carried in the conference calling request are the conference service system A, the conference service system B, and the conference service system C.

At step 330, the ICMS sends a conference notification message to each of the conference service system A, the conference service system B, and the conference service system C respectively.

The conference notification message sent to the conference service system A by the ICMS carries the terminals 1-10, the terminal 11, and the terminal 21 therein, and the terminal 5 is indicated as the broadcaster terminal;
the conference notification message sent to the conference service system B by the ICMS carries the terminals 11-20 therein, and the terminal 11 is indicated as a forwarder terminal; and
the conference notification message sent to the conference service system C by the ICMS carries the terminals 21-30 therein, and the terminal 21 is indicated as a forwarder terminal.

In the present embodiment, the broadcaster terminal is the broadcaster terminal in a conference set by the user, and a function of the forwarder terminal is similar as a function of the broadcaster terminal. That is, the broadcaster terminal may upload a video code stream to a corresponding conference service system, so that the conference service system may forward the video code stream to other terminals.

For example, in this example, the terminal 11 is an ordinary terminal in a conference of the conference service system A, and is neither the broadcaster terminal nor the forwarder terminal. Thus, the terminal 11 only receives the video code stream sent by the conference service system A. The terminal 11 is the forwarder terminal in a conference of the conference service system B. Thus, the terminal 11 may uploads the video code stream to the corresponding conference service system B, so that the conference service system B may forward the video code stream to other terminals.

At step 340, after receiving the conference notification message sent by the ICMS, the conference service system A adds the terminals 1-10, the terminal 11 and the terminal 21 to the conference according to the conference notification message.

At step 350, after receiving the conference notification message sent by the ICMS, the conference service system B adds the terminals 11-20 to the conference according to the conference notification message.

At step 360, after receiving the conference notification message sent by the ICMS, the conference service system C adds the terminals 21-30 to a conference according to the conference notification message.

It can be understood that step 340, step 350 and step 360 are not performed in a certain order.

At step 370, the conference service system A receives a video code stream sent by the terminal 5, and acquires a corresponding broadcast code stream. The conference service system A sends the broadcast code stream to corresponding respective terminals including the terminal 11 and the terminal 21. The conference service system A does not send the video code stream to the broadcaster terminal. For example, in this example, the conference service system A does not send the video code stream to the terminal 5. If there are multiple broadcaster terminals, a synthetic processing is performed to images of the multiple broadcaster terminals, and the processed video code stream is sent to respective broadcaster terminals.

At step 380, after receiving the broadcast code stream sent by the conference service system A, the terminal 11 uploads the broadcast code stream to the conference service system B; and
after receiving the broadcast code stream sent by the conference service system A, the terminal 21 uploads the broadcast code stream to the conference service system C.

At step 390, after acquiring the broadcast code stream, the conference service system B sends the broadcast code stream to respective terminals corresponding to the present conference service system, i.e., the terminals 12-20. The terminal 11 is a provider of the broadcast code stream, and is equivalent to the broadcaster terminal for the conference service system B. Therefore, the conference service system B does not send the broadcast code stream to the terminal 11.

After acquiring the broadcast code stream, the conference service system C sends the broadcast code stream to respective terminals corresponding to the present conference service system, i.e., the terminals 22-30.

It can be understood that when forwarding the video code stream, the conference service system performs an appropriate processing to the video code stream.

The conference control method provided in the present embodiment will be illustrated in another specific example below.

Contents of the local address book of the ICMS are the same as that in the above example.

In this example, the terminal 5 is a broadcaster terminal, and the terminal 1, the terminal 11 and the terminal 21 are capable of receiving the dual-path calling. The ICMS receives a request that a conference involving the terminals 1-30 is to be held.

Step 410 and step 420 are the same as step 310 and step 320, and will not be repeated.

At step 430, the ICMS sends a conference notification message to each of the conference service system A, the conference service system B, and the conference service system C respectively.

The conference notification message sent to the conference service system A by the ICMS carries the terminals 1-10 therein, and the terminal 5 is indicated as the broadcaster terminal;
the conference notification message sent to the conference service system B by the ICMS carries the terminals 11-20 and the terminal 1 therein, and the terminal 1 is indicated as a forwarder terminal; and
the conference notification message sent to the conference service system C by the ICMS carries the terminals 21-30 and the terminal 1 therein, and the terminal 1 is indicated as a forwarder terminal.

At step 440, after receiving the conference notification message sent by the ICMS, the conference service system A adds the terminals 1-10 to the conference according to the conference notification message.

At step 450, after receiving the conference notification message sent by the ICMS, the conference service system B adds the terminals 11-20 and the terminal 1 to the conference according to the conference notification message.

At step 460, after receiving the conference notification message sent by the ICMS, the conference service system C adds the terminals 21-30 and the terminal 1 to a conference according to the conference notification message.

It can be understood that step 440, step 450 and step 460 are not performed in a certain order.

At step 470, the conference service system A receives a video code stream sent by the terminal 5, and acquires a corresponding broadcast code stream. The conference service system A sends the broadcast code stream to corresponding respective terminals.

At step 480, after receiving the broadcast code stream sent by the conference service system A, the terminal 1 uploads the broadcast code stream to the conference service system B and the conference service system B.

At step 490, after acquiring the broadcast code stream, the conference service system B sends the broadcast code stream to respective terminals corresponding to the present conference service system, i.e., the terminals 12-20; and
after acquiring the broadcast code stream, the conference service system C sends the broadcast code stream to respective terminals corresponding to the present conference service system, i.e., the terminals 21-30.

The conference control method provided in the present embodiment will be illustrated in another specific example below.

Contents of the local address book of the ICMS are the same as that in the above example.

In this example, the terminal 5 is a broadcaster terminal, and the terminal 11 is capable of receiving the dual-path calling. The ICMS receives a request that a conference involving the terminals 1-30 is to be held.

Step 510 and step 520 are the same as step 310 and step 320, and will not be repeated.

At step 530, the ICMS sends a conference notification message to each of the conference service system A, the conference service system B, and the conference service system C respectively.

The conference notification message sent to the conference service system A by the ICMS carries the terminals 1-10 and terminal 11 therein, and the terminal 5 is indicated as the broadcaster terminal;
the conference notification message sent to the conference service system B by the ICMS carries the terminals 11-20 therein, and the terminal 11 is indicated as a forwarder terminal; and
the conference notification message sent to the conference service system C by the ICMS carries the terminals 21-30 and terminal 11 therein, and the terminal 11 is indicated as a forwarder terminal.

At step 540, after receiving the conference notification message sent by the ICMS, the conference service system A adds the terminals 1-10 and the terminal 11 to the conference according to the conference notification message.

At step 550, after receiving the conference notification message sent by the ICMS, the conference service system B adds the terminals 11-20 to the conference according to the conference notification message.

At step 560, after receiving the conference notification message sent by the ICMS, the conference service system C adds the terminals 21-30 and the terminal 11 to a conference according to the conference notification message.

It can be understood that step 540, step 550 and step 560 are not performed in a certain order.

At step 570, the conference service system A receives a video code stream sent by the terminal 5, and acquires a corresponding broadcast code stream. The conference service system A sends the broadcast code stream to corresponding respective terminals including the terminal 11.

At step 580, after receiving the broadcast code stream sent by the conference service system A, the terminal 11 uploads the broadcast code stream to the conference service system B and the conference service system B.

At step 590, after acquiring a distributed code stream, the conference service system B sends the distributed code stream to respective terminals corresponding to the present conference service system, i.e., the terminals 11-20; and
after acquiring the distributed code stream, the conference service system C sends the distributed code stream to respective terminals corresponding to the present conference service system, i.e., the terminals 21-30.

A conference control system is further provided in an embodiment of the present disclosure, and the conference control system provided in the present embodiment includes:
an ICMS 10 and conference service systems 20, each of the conference service systems 20 being arranged on a respective one of MCUs 30 and the ICMS 10 being connected to each of conference service systems.

The ICMS 10 includes:
a request input unit, which is configured to receive a conference calling request input by a user, the conference calling request carrying a list of terminals to attend the conference therein;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message.

The conference service system includes:
a receiving unit, which is configured to receive the conference notification message sent by the ICMS; and
a conference unit, which is configured to hold a conference according to the conference notification message after receiving the conference notification message sent by the ICMS.

In the present embodiment, the ICMS further includes a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book and/or notify the conference service system to update the corresponding first address book according to a comparison result.

The conference service system further includes a second address book management unit, which is configured to: receive an address book querying request message sent by the ICMS; send the first address book corresponding to the present conference service system to the ICMS after receiving the address book querying request message sent by the ICMS; receive a message for notifying the conference service system to update the corresponding first address book sent by the ICMS; and add a terminal identifier carried in the message to the first address book after receiving the message for notifying the conference service system to update the corresponding first address book sent by the ICMS.

In the present embodiment, if the first address book has a terminal identifier that is not included in the second address book, the terminal identifier is added to the second address book.

If the second address book has a terminal identifier that is not included in the first address book, the terminal identifier is sent to the conference service system, so as to notify the conference service system to add the terminal identifier to the corresponding first address book.

In the present embodiment, the determination unit is further configured to determine a terminal to be supplemented to each of the conference service systems, and make the terminal to be supplemented carried in the conference notification message.

The determination unit determines the terminal to be supplemented to each of the conference service systems according one of the following manners.

In a first manner, when a first conference service system corresponding to the broadcaster terminal establishes a conference, a terminal for receiving the dual-path calling in a second conference service system is added to the conference of the first conference service system.

In a second manner, when a second conference service system other than the first conference service system corresponding to the broadcaster terminal establishes the conference, a terminal for receiving the dual-path calling in the first conference service system is added to the conference of the second conference service system.

Terminal identifiers carried in the conference notification message include at least one of a conference terminal identifier, a broadcaster terminal identifier and a forwarder terminal identifier.

The conference unit is further arranged to add terminals corresponding to the terminal identifiers carried in the conference notification message to the conference. When the broadcaster terminal identifier is included in the conference notification message, the conference service system receives a broadcast code stream sent by the broadcaster terminal, and sends the broadcast code stream to other respective terminals corresponding to the conference service system. When the forwarder terminal identifier is included in the conference notification message, the conference service system receives a broadcast code stream sent by a forwarder terminal, and sends the broadcast code stream to other respective terminals corresponding to the conference service system.

In the present embodiment, when the terminal to be supplemented to each of the conference service systems is determined according to the first manner, a determination process further includes that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system.

An ICMS is further provided in an embodiment of the present disclosure. The ICMS is connected to each of conference service systems, and each of the conference service system is arranged on a respective one of MCUs. The ICMS provided in the present embodiment includes:
a request input unit, which is configured to receive a conference calling request input by a user, the conference calling request carrying a list of terminals to attend the conference;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message.

In the present embodiment, the ICMS further includes:
a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book and/or notify the conference service system to update the corresponding first address book according to a comparison result.

In the present embodiment, if the first address book has a terminal identifier that is not included in the second address book, the terminal identifier is added to the second address book.

If the second address book has a terminal identifier that is not included in the first address book, the terminal identifier is sent to the conference service system, so as to notify the conference service system to add the terminal identifier to the corresponding first address book.

In the present embodiment, the determination unit is further configured to determine a terminal to be supplemented to each of the conference service systems, and make the terminal to be supplemented carried in the conference notification message.

The determination unit determines the terminal to be supplemented to the each of the conference service systems according one of the following manners.

In a first manner, when a first conference service system corresponding to the broadcaster terminal establishes a conference, a terminal for receiving the dual-path calling in a second conference service system is added to the conference of the first conference service system; and
the terminal for receiving the dual-path calling in the second conference service system is arranged to be a forwarder terminal in the conference of the second conference service system.

For the first conference service system, when the terminal to be supplemented to each of the conference service systems is determined, a terminal capable of receiving the dual-path calling assigned by the user to attend the conference may be determined as the terminal to be supplemented. If there is no terminal capable of receiving the dual-path calling among terminals assigned by the user to attend the conference, another terminal capable of receiving the dual-path calling is determined as the terminal to be supplemented.

In a second manner, when a second conference service system other than the first conference service system corresponding to the broadcaster terminal establishes the conference, a terminal for receiving the dual-path calling in the first conference service system is added to the conference of the second conference service system, and the terminal is used as a forwarder terminal in the conference of the second conference service system.

In this manner, the first conference service system should have a terminal for receiving the dual-path calling therein. If the first conference service system does not have the terminal for receiving the dual-path calling therein, the conference should be organized according to another manner.

In the present embodiment, when the terminal to be supplemented to the respective conference service systems is determined according to the first manner, a determination process further includes that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system, and the terminal is used as a forwarder terminal in the second conference service system.

In the present embodiment, a terminal capable of receiving the dual-path calling assigned by the user to attend the conference may be determined as the forwarder terminal. If there is no terminal capable of receiving the dual-path calling among terminals assigned by the user to attend the conference, another terminal capable of receiving the dual-path calling is determined as the forwarder terminal.

A conference service system is further provided in an embodiment of the present disclosure, and the conference service system is connected to the ICMS. The conference service system is arranged on each MCU. The conference service system provided in the present embodiment includes:
a receiving unit, which is configured to receive a conference notification message sent by the ICMS; and
a conference unit, which is configured to hold a conference according to the conference notification message after receiving the conference notification message sent by the ICMS.

In the present embodiment, the conference service system further includes a second address book management unit. The second address book management unit is configured to:
receive an address book querying request message sent by the ICMS;
sent a first address book corresponding to the present conference service system to the ICMS after receiving the address book querying request message sent by the ICMS;
receive a message for notifying the conference service system to update the corresponding first address book sent by the ICMS; and
add a terminal identifier carried in the message to the first address book after receiving the message for notifying the conference service system to update the corresponding first address book sent by the ICMS.

In the present embodiment, terminal identifiers carried in the conference notification message include at least one of a conference terminal identifier, a broadcaster terminal identifier and a forwarder terminal identifier.

The conference unit is further arranged to:
add terminals corresponding to the terminal identifiers carried in the conference notification message to the conference.

When the broadcaster terminal identifier is included in the conference notification message, the conference service system receives a broadcast code stream sent by the broadcaster terminal, and sends the broadcast code stream to other respective terminals corresponding to the conference service system.

When the forwarder terminal identifier is included in the conference notification message, the conference service system receives a broadcast code stream sent by a forwarder terminal, and sends the broadcast code stream to other respective terminals corresponding to the conference service system.

The present disclosure further discloses a computer readable storage medium with a computer executable instruction stored therein, and the computer executable instruction implements any method described above when executed by a processor.

Those ordinary skilled in the art may appreciate that a functional module/unit in all or some steps in the method, the system, and the device disclosed above may be implemented as software, firmware, hardware, and suitable combinations thereof. In a hardware implementation, division of functional modules/units mentioned in the above description does not necessarily correspond to division of physical components. For example, one physical component may have multiple functions, or one function or step may be executed by cooperation of several physical components. Some or all of the components may be implemented as software executed by a processor, such as a digital signal processor or a microprocessor, or as hardware, or as an integrated circuit, such as a special integrated circuit. Such software may be distributed on a computer readable medium. The computer readable medium may include a computer storage medium (or non-transitory medium) and a communication medium (or transitory medium). As is well known to those ordinary skilled in the art, the term computer storage medium includes volatile and nonvolatile, removable and non-removable mediums implemented in any method or technology for storing information (such as a computer readable instruction, a data structure, a program module or other data). The computer storage medium includes, but is not limited to: RAM, ROM, EEPROM, flash memory or other memory technologies; CD-ROM, digital versatile disc (DVD) or other optical disc storage; magnetic cassette, magnetic tape, magnetic disk storage or other magnetic storage devices; or any other medium that may be used to store desired information and may be accessed by the computer. Moreover, it is well known to those skilled in the art that the communication medium typically includes a computer readable instruction, a data structure, a program module, or other data in a modulated data signal, such as a carrier wave or other transport mechanisms, and may include any information delivery medium.

The embodiment described above is only for facilitating understanding by those skilled in the art, and is not for limiting the protection scope of the present disclosure. Without departing from the inventive concept of the present disclosure, any replacement, improvement and so on to the present disclosure made by those skilled in the art all fall within the protection scope of the present disclosure.

### Industrial Applicability

The solution provided by the present disclosure includes: receiving, by an ICMS, a conference calling request input by a user, the conference calling request carrying a list of terminals to attend the conference therein; learning, by the ICMS, each of conference service systems corresponding to a respective one of terminal identifiers carried in the conference calling request by querying a local address book; sending, by the ICMS, a conference notification message to the each of conference service systems learned; holding, by the conference service systems, a conference according to the conference notification message after the conference notification message sent by the ICMS is received. By means of the solution of the present disclosure, when a conference is to be held, it is only needed to operate on an ICMS system, i.e., selecting terminals to attend the conference and clicking to hold a conference, which is easy to use and does not require that a user set a complicated cascade relationship each time when a conference is to be held; there is no longer a cascade port, and cascading is realized by way of terminals; and conference control response is quick, and for the case, that one conference management system manages multiple MCUs, an original performance bottleneck problem and a problem of frequently switching among conferences by controls terminals are solved.

## Claims

1. A conference control method, comprising:
receiving, by an integrated conference management system ICMS, a conference calling request input by a user, the conference calling request carrying a list of terminals to attend the conference therein;
learning, by the ICMS, each of conference service systems corresponding to a respective one of terminal identifiers carried in the conference calling request by querying a local address book;
sending, by the ICMS, a conference notification message to each of the conference service systems learned;
holding, by the conference service systems, a conference according to the conference notification message after the conference notification message sent by the ICMS is received.

2. The method according to claim 1, wherein the conference control method further comprises:
sending, by the ICMS, an address book querying request message to each of the conference service systems respectively;
sending, by each of the conference service systems, a first address book corresponding to the present conference service system to the ICMS after the address book querying request message sent by the ICMS is received;
comparing, by the ICMS, the first address book with a second address book corresponding to the conference service system locally stored in the ICMS after the first address book sent by each of the conference service systems is received, and updating the second address book, or notifying the conference service system to update the corresponding first address book, or updating the second address book and notifying the conference service system to update the corresponding first address book according to a comparison result.

3. The method according to claim 2, wherein
if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

4. The method according to claim 1, wherein the conference control method further comprises holding the conference by the conference service systems according to one of the following manners:
in a first manner, when a first conference service system corresponding to a broadcaster terminal establishes the conference, a terminal for receiving a dual-path calling in a second conference service system is added to the conference of the first conference service system; after receiving a broadcast code stream sent by the first conference service system, the terminal uploads the broadcast code stream to the second conference service system; and the second conference service system sends the broadcast code stream to multiple terminals corresponding to the second conference service system; and
in a second manner, when the second conference service system other than the first conference service system corresponding to the broadcaster terminal establishes the conference, a terminal for receiving the dual-path calling in the first conference service system is added to the conference of the second conference service system; after receiving the broadcast code stream sent by the first conference service system, the terminal uploads the broadcast code stream to the second conference service system; and the second conference service system sends the broadcast code stream to multiple terminals corresponding to the second conference service system.

5. The method according to claim 1, wherein when the conference is held according to the first manner, the method further comprises that:
when a third conference system other than the first conference service system corresponding to the broadcaster terminal establishes the conference, if the third conference system is not provided therein with a terminal for receiving the dual-path calling, the third conference system adds a terminal for receiving the dual-path calling in other conference systems to the conference of the third conference system, and the terminal uploads the broadcast code stream to the third conference system after receiving the broadcast code stream sent by the first conference service system.

6. A conference control method, comprising:
receiving, by an integrated conference management system ICMS, a conference calling request input by a user, the conference calling request carrying a list of terminals to attend the conference therein;
learning, by the ICMS, each of conference service systems corresponding to a respective one of terminal identifiers carried in the conference calling request by querying a local address book; and
sending, by the ICMS, a conference notification message to each of the conference service systems learned, so that the conference service systems hold a conference according to the conference notification message received.

7. The method according to claim 6, wherein the conference control method further comprises:
sending, by the ICMS, an address book querying request message to each of the conference service systems respectively;
receiving, by the ICMS, a first address book corresponding to the conference service system sent by each of the conference service systems;
comparing, by the ICMS, the first address book with a second address book corresponding to the conference service system locally stored in the ICMS, and updating the second address book, or notifying the conference service system to update the corresponding first address book, or updating the second address book and notifying the conference service system to update the corresponding first address book according to a comparison result.

8. The method according to claim 7, wherein
if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

9. The method according to claim 6, wherein after the ICMS learns each of the conference service systems corresponding to the respective one of terminal identifiers carried in the conference calling request by querying the local address book, the ICMS further determines a terminal to be supplemented to each of the conference service systems;
wherein the conference notification message sent by the ICMS to each of the conference service systems carries the terminal to be supplemented therein; and
the ICMS determines the terminal to be supplemented to each of the conference service systems according to one of the following manners:
in a first manner, when a first conference service system corresponding to a broadcaster terminal establishes the conference, a terminal for receiving a dual-path calling in a second conference service system is added to the conference of the first conference service system, and
the terminal for receiving the dual-path calling in the second conference service system is arranged to be a forwarder terminal in the conference of the second conference service system; and
in a second manner, when the second conference service system other than the first conference service system corresponding to the broadcaster terminal establishes the conference, a terminal for receiving the dual-path calling in the first conference service system is added to the conference of the second conference service system, and the terminal is arranged to be the forwarder terminal in the conference of the second conference service system.

10. The method according to claim 9, wherein when the terminal to be supplemented to each of the conference service systems is determined according to the first manner, the method further comprises that:
when a third conference system other than the first conference service system corresponding to the broadcaster terminal establishes the conference, if the third conference system is not provided therein with a terminal for receiving the dual-path calling, the third conference system adds a terminal for receiving the dual-path calling in other conference systems to the conference of the third conference system, and the terminal is arranged to be the forwarder terminal in the conference of the second conference service system.

11. A conference control method, comprising:
holding, by conference service systems after a conference notification message sent by an integrated conference management system ICMS is received, a conference according to the conference notification message.

12. The method according to claim 11, wherein the conference control method further comprises:
sending, by each of the conference service systems after an address book querying request message sent by the ICMS is received, a first address book corresponding to the present conference service system to the ICMS; and
adding, by each of the conference service systems after a message for notifying the conference service system to update the first address book corresponding to the conference service system sent by the ICMS, a terminal identifier carried in the message to the first address book.

13. The method according to claim 11, wherein terminal identifiers carried in the conference notification message comprise at least one of a conference terminal identifier, a broadcaster terminal identifier and a forwarder terminal identifier;
the conference service system adds terminals corresponding to the terminal identifiers carried in the conference notification message to the conference;
wherein when the broadcaster terminal identifier is included in the conference notification message, the conference service system receives a broadcast code stream sent by a broadcast terminal and sends the broadcast code stream to other multiple terminals corresponding to the conference service system; and
when the forwarder terminal identifier is included in the conference notification message, the conference service system receives a broadcast code stream sent by a forwarder terminal and sends the broadcast code stream to other multiple terminals corresponding to the conference service system.

14. A conference control system, wherein the conference control system comprises an integrated conference management system ICMS and conference service systems, wherein each of the conference service systems is arranged on a respective one of multipoint control units MCUs, and the ICMS is connected to each of the conference service systems,
wherein the ICMS comprises:
a request input unit, which is configured to receive a conference calling request input by a user, the conference calling request carrying a list of terminals to attend the conference therein;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message, and
wherein the conference service system comprises:
a receiving unit, which is configured to receive the conference notification message sent by the ICMS; and
a conference unit, which is configured to hold a conference according to the conference notification message after receiving the conference notification message sent by the ICMS.

15. The system according to claim 14, wherein:
the ICMS further comprises a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book, or notify the conference service system to update the corresponding first address book, or update the second address book and notify the conference service system to update the corresponding first address book according to a comparison result; and
the conference service system further comprises a second address book management unit, which is configured to: receive the address book querying request message sent by the ICMS; send the first address book corresponding to the present conference service system to the ICMS after receiving the address book querying request message sent by the ICMS; receive a message for notifying the conference service system to update the corresponding first address book sent by the ICMS; and add a terminal identifier carried in the message to the first address book after receiving the message for notifying the conference service system to update the corresponding first address book sent by the ICMS.

16. The system according to claim 15, wherein:
if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

17. The system according to claim 14, wherein:
the determination unit is further configured to determine a terminal to be supplemented to each of the conference service systems, and make the terminal to be supplemented carried in the conference notification message,
wherein the determination unit determines the terminal to be supplemented to each of the conference service systems according one of the following manners:
in a first manner, when a first conference service system corresponding to the broadcaster terminal establishes a conference, a terminal for receiving the dual-path calling in a second conference service system is added to the conference of the first conference service system; and
in a second manner, when the second conference service system other than the first conference service system corresponding to the broadcaster terminal establishes the conference, a terminal for receiving the dual-path calling in the first conference service system is added to the conference of the second conference service system;
terminal identifiers carried in the conference notification message comprise at least one of a conference terminal identifier, a broadcaster terminal identifier and a forwarder terminal identifier; and
the conference unit is further arranged to add terminals corresponding to the terminal identifiers carried in the conference notification message to the conference, wherein when the broadcaster terminal identifier is included in the conference notification message, the conference service system receives a broadcast code stream sent by the broadcaster terminal, and sends the broadcast code stream to other multiple terminals corresponding to the conference service system, and wherein when the forwarder terminal identifier is included in the conference notification message, the conference service system receives a broadcast code stream sent by a forwarder terminal, and sends the broadcast code stream to other multiple terminals corresponding to the conference service system.

18. The system according to claim 14, wherein when the terminal to be supplemented to each of the conference service systems is determined according to the first manner, a determination process further comprises that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system.

19. An integrated conference management system ICMS, wherein the ICMS is connected to each of conference service systems, and each of the conference service systems is arranged on a respective one of multipoint control units MCUs; and
the ICMS comprises:
a request input unit, which is configured to receive a conference calling request input by a user, the conference calling request carrying a list of terminals to attend the conference therein;
a determination unit, which is configured to learn each of the conference service systems corresponding to a respective one of terminal identifiers carried in the conference calling request by querying a local address book; and
a notification unit, which is configured to send a conference notification message to each of the conference service systems learned, so that the conference service systems hold a conference according to the conference notification message

20. The ICMS according to claim 19, wherein the ICMS further comprises:
a first address book management unit, which is configured to: send an address book querying request message to each of the conference service systems respectively; receive a first address book corresponding to the conference service system sent by each of the conference service systems; and compare the first address book with a second address book corresponding to the conference service system stored locally in the ICMS, and update the second address book, or notify the conference service system to update the corresponding first address book, or update the second address book and notify the conference service system to update the corresponding first address book according to a comparison result.

21. The ICMS according to claim 20, wherein:
if the first address book has a terminal identifier that is not included in the second address book, the terminal identifier is added to the second address book; and
if the second address book has a terminal identifier that is not included in the first address book, the terminal identifier is sent to the conference service system, so as to notify the conference service system to add the terminal identifier to the corresponding first address book.

22. The ICMS according to claim 19, wherein the determination unit is further configured to determine a terminal to be supplemented to each of the conference service systems, and make the terminal to be supplemented carried in the conference notification message; and
wherein the determination unit determines the terminal to be supplemented to each of the conference service systems according one of the following manners:
in a first manner, when a first conference service system corresponding to the broadcaster terminal establishes a conference, a terminal for receiving the dual-path calling in a second conference service system is added to the conference of the first conference service system,
and the terminal for receiving the dual-path calling in the second conference service system is arranged to be a forwarder terminal in the conference of the second conference service system; and
in a second manner, when the second conference service system other than the first conference service system corresponding to the broadcaster terminal establishes the conference, a terminal for receiving the dual-path calling in the first conference service system is added to the conference of the second conference service system, and the terminal is arranged to be a forwarder terminal forwarder terminal in the conference of the second conference service system.

23. The ICMS according to claim 22, wherein when the terminal to be supplemented to each of the conference service systems is determined according to the first manner, a determination process further comprises that:
when a third conference system other than the first conference service system corresponding to the broadcaster terminal establishes the conference, if the third conference system is not provided therein with a terminal capable of receiving the dual-path calling, the third conference system adds a terminal capable of receiving the dual-path calling in other conference systems to the conference of the third conference system, and the terminal is arranged to be the forwarder terminal forwarder terminal in the conference of the second conference service system.

24. A conference service system, comprising:
a receiving unit, which is configured to receive a conference notification message sent by an ICMS; and
a conference unit, which is configured to hold a conference according to the conference notification message after receiving the conference notification message sent by the ICMS.

25. The conference service system according to claim 24, wherein the conference service system further comprises a second address book management unit, which is configured to:
receive an address book querying request message sent by the ICMS;
send a first address book corresponding to the present conference service system to the ICMS after receiving the address book querying request message sent by the ICMS;
receive a message for notifying the conference service system to update the corresponding first address book sent by the ICMS; and
add a terminal identifier carried in the message to the first address book after receiving the message for notifying the conference service system to update the corresponding first address book sent by the ICMS.

26. The conference service system according to claim 24, wherein terminal identifiers carried in the conference notification message comprise at least one of a conference terminal identifier, a broadcaster terminal identifier and a forwarder terminal identifier; and
the conference unit is further arranged to:
add terminals corresponding to the terminal identifiers carried in the conference notification message to the conference,
wherein when the broadcaster terminal identifier is included in the conference notification message, the conference service system receives a broadcast code stream sent by the broadcaster terminal, and sends the broadcast code stream to other multiple terminals corresponding to the conference service system, and
wherein when the forwarder terminal identifier is included in the conference notification message, the conference service system receives a broadcast code stream sent by a forwarder terminal, and sends the broadcast code stream to other multiple terminals corresponding to the conference service system.
